# EUROPEAN PATENT SPECIFICATION

(11) **EP 0 460 634 B1**
(45) Date of publication and mention of the grant of the patent: **31.01.1996**
(21) Application number: 91109186.6
(22) Date of filing: 05.06.1991
(51) Int. Cl.: H01R 43/18

(54) **Terminal housing with integral carrier strip which produces no loose piece slugs**
Steckergehäuse mit einstückig angebrachtem Trägerstreifen der keine losen Abfallstücke erzeugt
Boîte terminale avec bande de support intégrée ne produisant aucun débris

(30) Priority: 08.06.1990 GB 9012753
(43) Date of publication of application: 11.12.1991
(73) Proprietor: THE WHITAKER CORPORATION, Wilmington, Delaware 19808 (US)
(72) Inventor: Münk, Ulrich Bruno, W-6100 Darmstadt (DE); Gerst, Michael, W-6520 Worms (DE)
(74) Representative: Klunker . Schmitt-Nilson . Hirsch

(56) References cited:
- DE-A- 2 616 844
- DE-A- 2 937 226
- DE-A- 3 331 594

## Description

The invention is directed to terminal housings which have an integral carrier strip provided thereon. The housings and the carrier strip are configured such that as a respective housing is severed from the carrier strip, a portion of the carrier strip is moved into another respective housing, thereby eliminating the need to dispose of loose piece material or slugs.

Once a housing has been molded, terminals must be inserted therein, and the housing must be mated with other housings, etc. In some circumstances, the manipulation of loose piece terminal housings is preferred. However, in other instances, the manipulation of the loose piece terminals is not preferred, and is not advantageous. This is particularly evident in instance in which robotic equipment is used to position the terminals in the housings. In such situations, it is advantageous to deliver the individual housings to the robotic equipment in the form of a continuous strip, i.e. with the housings attached to some type of carrier strip.

The use of carrier strips has facilitated the transportation and manipulation of the housings. In fact the speed of many machines can be increased with the use of carrier strips.

However, there are problems associated with carrier strips. If the carrier strip is made from a different material than the housings, the housings must be positioned on the carrier strip, thereby adding another step and increasing the cost of the housings.

On the other hand, if the carrier strip is made from the same material as the housings, such that the carrier strip can be integrally molded to the housings, the additional step and the added cost, as discussed above, are eliminated. However, the removal of the carrier strip can become a problem. As the housings are separated, the integral carrier strip which joins the housings must be removed. This is normally done through a shearing process or the like. This process creates loose piece material or slugs which must be removed from the assembly machinery. Consequently, costly removal devices must be incorporated in the machine in order to insure that the slugs are removed. This adds to the complexity of the machine, and adds to the overall cost of the parts produced. It should also be noted that although these slug removal devices are provided on the machines, it is likely that not all of the slugs will be properly removed. These slugs will remain in the machine, causing the machine to break down, thereby incurring repair and delay costs.

From document DE-A1-2,937,226, a housing dimensioned to receive electrical terminals therein has come to be known. This known housing has a first and a second end surface, and at least one carrier projection extending from the first end surface in a direction away from the second end surface, the carrier projection having a free end. The free end is to be inserted into an opening formed in the second end surface of an adjacent housing.

It would therefore be beneficial to provide a carrier strip which is integrally to the housing, but which does not produce such loose piece material or slugs when the housings are separated from each other. This would provide the most cost effective and efficient manner in which to deliver the housings to the machinery.

This technical problem is solved according to the invention by a housing according to one of the independent claims 1 or 10 as well as by a method of delivering individual terminal housings to a work station according to claim 9. Dependent claims 2 to 8 and 11 to 14 exhibit non-trivial improvements of the subject-matter of the claims to which they refer back, respectively.

The invention is related to a housing which is dimensioned to receive electrical terminals therein. The housing has a first end surface and an oppositely facing second end surface. At least one carrier projection extends from the first end surface in a direction away from the second end surface. The carrier projection has a free end positioned away from the first end surface. At least one recess extends from the second end surface in a direction toward the first end surface. The recess has a first opening and a second opening provided thereon.

As a first respective housing is moved into cooperation with a second respective housing, the free end of the carrier projection of the first housing will be positioned in the recess of the second housing, such that a plurality of housings will be provided in a carrier strip.

The invention is also related to a plurality of housings which are attached by a carrier strip. The carrier strip has carrier projections which extend from each respective housing, the carrier projections have enlarged portions provided at the free ends thereof. Recesses are provided on the housings, the recesses have first and second openings which cooperate with the enlarged portions of the carrier projections, such that when the enlarged portions are positioned in the first openings, the housing will be spaced from each other in a carrier strip arrangement, and when the enlarged portions are positioned in the second openings, and the carrier projections are severed from their respective housings, the carrier projections will be entirely disposed within the recesses of the housings, thereby preventing the carrier projections from interfering with the work station in which the housings are to be used.

A method of delivering individual terminal housings to a work station is also disclosed. This method insures that the individual terminal housings will be delivered to the work station without the creation of loose material which can damage the work station. The carrier strip is advanced, such that a respective individual terminal housing is positioned proximate to the work station. The respective individual terminal housing is then severed from the carrier projections, such that the individual terminal housing is free to move relative to the carrier strip. Finally, the carrier projections are moved from a first position, in which the carrier projections extend from a second housing, to a second position, in which the carrier projections are completely maintained in the second housing.
FIGURE 1 is a perspective view of a single terminal housing according to the invention, prior to the removal of the carrier strip projections;
FIGURE 2 is a perspective view of a plurality of the terminal housings joined together in carrier strip fashion;
FIGURE 3 is a perspective view of two terminal housings, each housing is provided to represent a different stage of removal of the housings from the carrier strip; and
FIGURE 4 is a cross-sectional view, of an alternative embodiment of the present invention, illustrating the various stages of removal of the housings from the carrier strip.

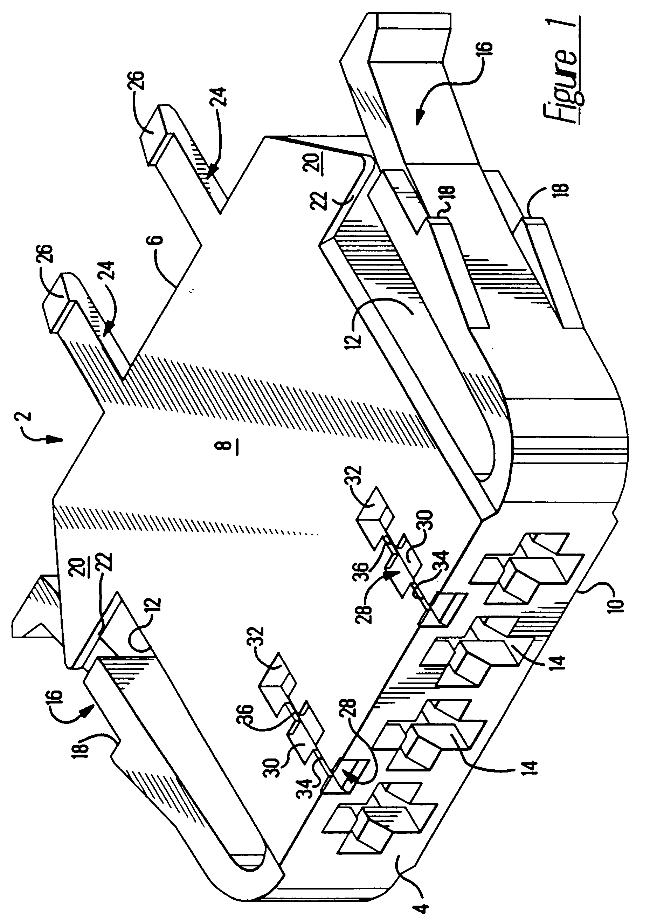

Referring to Figure 1, connector housing 2 has a mating face 4, a terminal receiving face 6, a top surface 8, a bottom surface 10, and side surfaces 12. In the particular embodiment shown, four terminal receiving cavities 14 are provided which extend from the mating face 4 to the terminal receiving face 6. It should be noted that although four terminal receiving cavities are shown, the particular number of cavities provided in the housing can vary.

Resilient latching arms 16 extend from the side surfaces 12 of the housing 2, and are integrally attached to the side surfaces proximate the mating surface 4. The latching arms 16 are configured to provide the resilient characteristics required to allow the housing to be snapped into position on a panel or in a mating connector. Shoulders 18 are positioned on the latching arms 16 to cooperate with the mating panel or connector (not shown), to insure that the housing 2 is maintained in position. As the operation of resilient latching arms is well known in the art, a further description of the operation of the latch arm will not be provided.

Triangular projections 20 extend from the side surfaces 12 of the housing 2, and are integrally attached to the side surfaces proximate the terminal receiving surface 6. The projections 20 have shoulders 22 which are provided to act as a stop surface when the housing 2 is mated with a mating panel. In other words, as the housing 2 is inserted into an opening of the mating panel, the resilient latching arms 16 are forced to deflect inward, toward the side surfaces 12. The insertion of the housing into the opening continues until a leading surface of the mating panel engages the shoulders 22 of the projections 20. The cooperation of the leading surface of the mating panel with the shoulders 22 prevents further movement of the housing 2 in the direction of insertion. At approximately the same moment that the leading surface engages the shoulders 22 of the projections 20, the shoulders 18 of the resilient latching arms 16 are moved beyond the trailing surface of the mating panel, thereby allowing the resilient arms 16 to return toward their unstressed position. This insures that the shoulders 18 will cooperate with trailing surface. The cooperation of shoulders 22 and shoulders 18 with respective surfaces of the mating panel provide the means required to maintain the housing 2 in position relative to the mating panel. It should also be noted that the projections 20 serve to prevent wires or other objects from being tangled between the resilient latching arms 16 and the side surfaces 12.

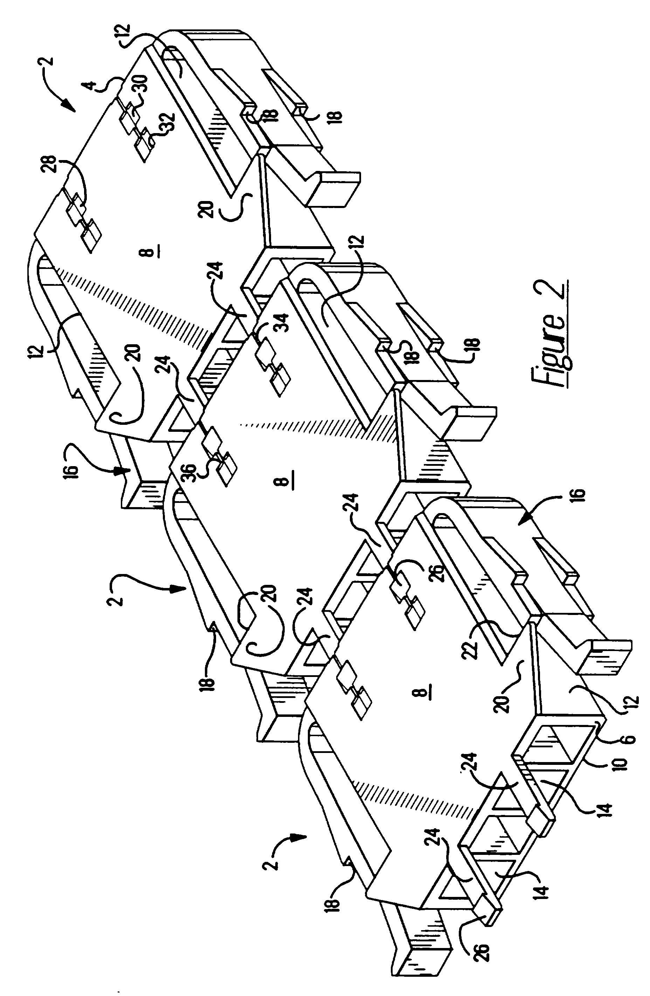

Carrier projections 24 extend from the top surface 8 in a direction which is essentially parallel to the plane of the top surface. As best shown in Figure 2, the carrier projections 24 extend from proximate the terminal-receiving surface 6 in a direction away from the mating surface 4. In the embodiment shown in Figures 1 through 3, two carrier projections 24 are shown. Although two projections would be a common number of projections, any number of carrier projections may be provided. Each carrier projection 24 has a dimple or enlarged portion 26 provided proximate a free end thereof.

Carrier projection receiving recesses 28 extend from proximate the top surface 8 towards the bottom surface 10 of the housing 2. The recesses are provided in alignment with the carrier projections 24, such that each carrier projection 24 has a recess 28 which is provided along the same longitudinal line of the housing 2. As best shown in Figure 2, the longitudinal alignment of the projections 24 and recesses 28 allows the housings 2 to be provided in a carrier strip, as will be more fully discussed below. It is important to note that the recesses 28 extend to the mating surface 4 of the housing 2, thereby providing an opening to the recess through the mating surface.

Each recess 28 is partially covered by the top surface 8, as best shown in Figure 1, to form a first opening 30, a second opening 32, a slit 34, and a slit 36. As is shown in the drawings, the slit 34 extends from the mating surface 4 toward the terminal receiving surface 6. Positioned at the end of the slit 34 is the opening 30 and opening 32. Opening 30 is connected to opening 32 by slit 36. The openings and the slits extend from the top surface 8 to the recess 28.

In order to position the housings 2 in a carrier strip configuration, each individual housing 2 is molded and then moved into engagement with respective other housings. In order to provide for the carrier strip configuration, as shown in Figure 2, the carrier projections 24 of a first housing are moved into the recesses 28 of a second housing. The alignment of the projections and recesses insures that, as the housings are moved together, the projections 24 will align with, and be positioned in the recesses 28.

As the first and the second housings 2 are moved together, the carrier projections 24 will be moved into the recesses 28 through the openings of the recesses provided in the mating surface 4 of the housing 2. The movement of the housings is continued until the dimples 26 are positioned in the first openings 30 of the housing. When this position is reached, the movement of the first and the second housings is stopped. It is important to note that the dimension of the recesses 28 and the carrier projections 24 insures that the dimples 26 will extend into the first opening 30 when the projections are properly positioned. It is because of this dimensioning that the slit 34 is provided in the top surface 8 of the housing 2. The slit 34 allows the material of the top surface to resiliently deform away from the bottom surface 10 of the housing 2 as the dimple 26 is inserted from the mating surface 4 to the first opening 30. Without the slit 34, it is conceivable that the dimple 26 would be damaged before the dimple was positioned in the first opening 30.

With the dimples 26 provided in the first openings 30, the dimples are essentially locked in position in the openings, i.e. the dimples are maintained in position until a sufficient force is applied thereto. Consequently, with the dimples 26 provided in the first openings 30, the housings 2 are provided in a continuous chain, or in a carrier strip arrangement, as shown in Figure 2. In this continuous chain, the projections 24 and the recesses 28 act as the carrier strip.

As the retention force of the dimple 26 in the first opening 30 is not great, the housings 2 may be easily separated into any desired length by merely pulling the appropriate number of housings away from the chain. This will cause the respective dimples to be removed from the respective first openings.

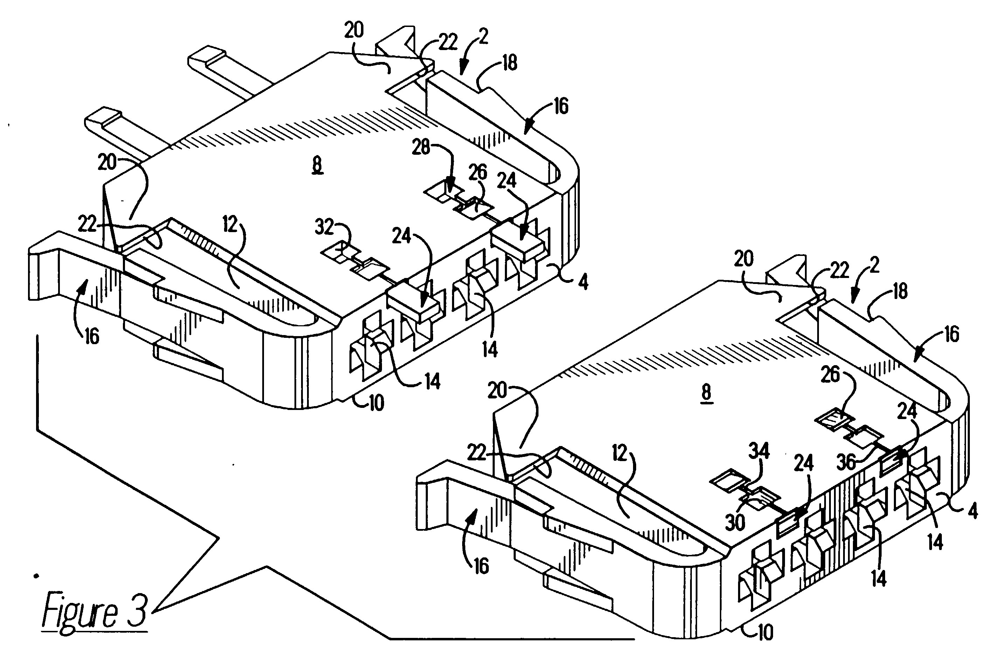

As a particular housing 2 is to be used, the following steps are performed, as illustrated in Figure 3. As will be discussed, the configuration of the housing allows the housing to be removed from the carrier strip without the creation of loose piece material or slugs which can damage the termination and assembly machinery.

The first housing is advanced to a position proximate the work station. In order to allow the first housing to be advanced independent of the remaining housings, the carrier projections 24 are severed from the housing 2. As illustrated in Figure 3, the carrier projections 24 are severed from the housing 2 at a position proximate to the terminal receiving surface 6, thereby providing the terminal receiving surface 6 with an essentially smooth surface when the carrier projections 24 are removed therefrom. The housing 2 is then advanced into position on the work station.

When the first housing 2 is severed from the carrier projections 24, the carrier projections 24 are maintained in position on the second housing, as shown in Figure 3. The carrier projections 24 are maintained in position on the second housing by the cooperation of the dimple 26 with the first openings 30, as was previously discussed. This insures that, as the carrier projections 24 are severed from the housings 2, the carrier projections 24 will be maintained in position relative to the remaining housings. In other words, the carrier projections 24 will not be free to fall into the machinery.

After the first housing is advanced to the work station, the carrier projections 24 are moved from a first position, in which the carrier projections 24 extend from the second housing, to a second position, in which the carrier projections are moved into the second housing so that no portion of the carrier projections extend beyond the mating surface 4 of the housing 2. After the first housing is moved, a force is applied to the severed ends of the carrier projections 24. The force is applied along the longitudinal axis of the carrier projections 24, in a direction which is parallel to the longitudinal axis. This force is of sufficient magnitude to cause the dimple 26 to be moved from the first opening 30 to the second opening 32. It should be noted that as the dimple is moved from the first opening to the second opening, the slit 36 allows the material of the top surface to resiliently deform away from the bottom surface 10 of the housing 2, thereby insuring that the dimple will not be damaged as it is moved from the first opening to the second opening.

As the dimple 26 is moved from the first opening to the second opening, the carrier projections 24 are moved from the first position to the second position. The length of the carrier projections 24 is such that as the dimples 26 are provided in the second openings 32, the severed ends of the projections will be positioned within the recesses 28 of the housings. Consequently, when the carrier projections 24 are provided in the second position, the severed ends of the projections will not extend beyond the mating surfaces 4 of the housings 2. This insures that the projections will not interfere with any function of the housings into which they are positioned.

With the carrier projections properly positioned in the second position, the second housing can be advanced to the work station as needed. The entire process is repeated in the manner described above. This continues as required.

The configuration of the housing and the steps used to separate the individual housing from each other insures that respective housings will be delivered to the work station as required. In addition, no loose piece plastic parts or slugs are produced. The portions of the carrier strip which are no longer required move into the recesses of the housing, thereby insuring that no loose parts are available to fall into the machinery. As no loose parts are generated, there is no possibility of the loose parts falling into the machinery to cause the machinery to operate improperly.

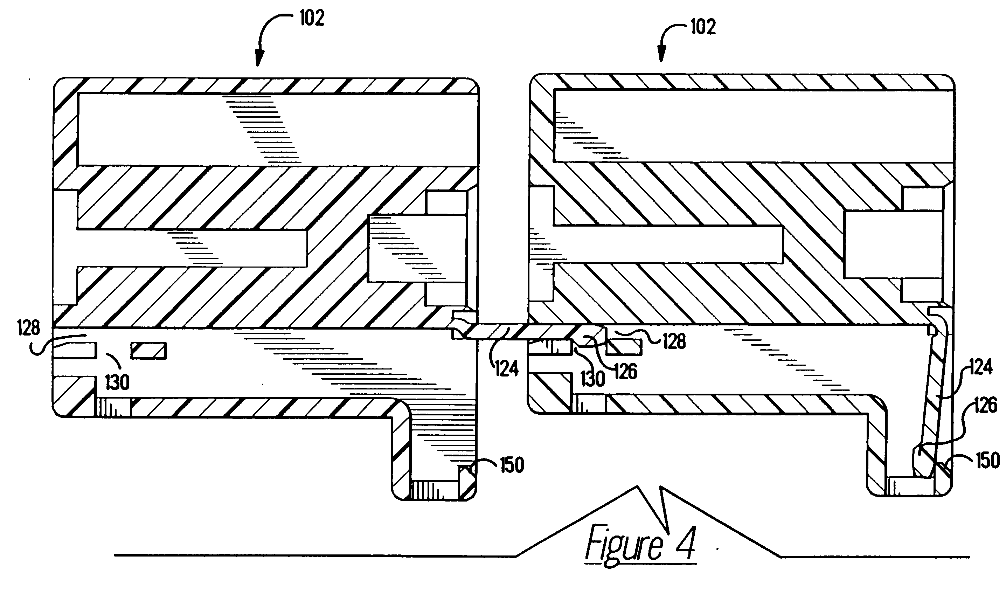

Figure 4 shows an alternate embodiment of the invention. Although the principal of the housing 102 is identical to that of the housing 2, the carrier strip projections 124 are configured in a slightly different manner.

The housings 102 are maintained in a carrier strip fashion by the cooperation of carrier projection 124 and recess 128. As shown in Figure 4, an enlarged end 126 of the projection 124 is provided in an opening 130 of the recess 128, positioning the projection in a first position. This provides a type of interference fit which maintains the first housing to the second housing. In order to remove the first housing from the second housing, the first housing is pulled away from the second housing, causing the projection 124 to be removed from the recess 128. The projection 124 is then bent so that the projection 124 extends in a plane which is essentially parallel to the plane of the mating face 104, thereby defining a second position of the projection. In order to retain the projection 124 in this position, the end 126 of the projection cooperates with a shoulder 150 to prevent the projection from returning to the first position.

Although the configuration of carrier projections 24 and 124 may differ, the result is the same. No loose piece plastic parts or slugs are produced. The portions of the carrier strip which are no longer required are moved into the mating face of the housing, thereby insuring that no loose parts are available to fall into the machinery. As no loose parts are generated, there is no possibility of the loose parts falling into the machinery to cause the machinery to operate improperly.

Changes in construction will occur to those skilled in the art and various apparently different modifications and embodiments may be made without departing from the scope of the invention. The matter set forth in the foregoing description and accompanying drawings is offered by way of illustration.

## Claims

1. A housing (2) dimensioned to receive electrical terminals therein, the housing (2) comprising:
a) a first end surface (6) and an oppositely facing second end surface (4);
b) at least one carrier projection (24) extending from the first end surface (6) in a direction away from the second end surface (6), the carrier projection (24) having a free end (26);
characterized in that
c) at least one recess (28) extends from the second end surface (4) in a direction toward the first end surface (6),
d) the recess (28) communicates with a first opening (30) and a second opening (32) provided on the housing (2);
e) whereby as a first respective housing is moved into the cooperation with a second respective housing, the free end (26) of the carrier projection (24) of the first housing will be positioned in the first opening (30) of the second housing such that a carrier strip is formed;
f) the free ends (26) being movable to the second opening (30) for retention of the severed carrier projections (24) of the first housing thereto.

2. A housing (2) as recited in claim 1 characterized in that the carrier projection (24) is integrally molded to the housing (2), the carrier projection (24) being severed from the housing (2) when the housing is to be removed from the carrier strip, the free end (26) of the carrier projection (24) is then moved from the first opening (30) to the second opening (32), the recess (28) being dimensioned to receive the carrier projection (24) therein when the free end (26) of the carrier projection (24) is moved to the second opening (32).

3. A housing (2) as recited in one of the claims 1 or 2 characterized in that the free end (26) has an enlarged portion provided proximate thereto, the enlarged portion (26) having dimensions which are slightly larger than the dimensions of the recess (28).

4. A housing (2) as recited in claim 3 characterized in that the enlarged portion (26) provided at the free end (26) is a dimple. 4

5. A housing (2) as recited in one of the claims 1,2 or 3 characterized in that the recess (28) is provided adjacent to a first side surface (8) of the housing (2), the first and second openings (30,32) extend from the recess (28) through the first side surface (8).

6. A housing (2) as recited in claim 5 characterized in that the openings (30,32) are spaced from each other by a portion of the first side surface (8) which extends over the recess (28), the portion of the first side surface (8) has a slot (36) provided therein.

7. A housing (2) as recited in one of the claims 1-6 characterized in that two carrier projections (24) and two recesses (28) are provided on each housing (2).

8. A housing (2) as recited in one of the claims 1-7 characterized in that each respective carrier projection is positioned in alignment with respective recesses (28).

9. A method of delivering individual terminal housings (2) to a work station, the method comprising the steps of:
advancing a carrier strip, such that the individual terminal housing (2) is positioned proximate to the work station;
severing the individual terminal housing (2) from carrier projections (24), such that the individual housing (2) is free to move relative to the carrier strip;
moving the carrier projections (24) from a first position, in which the carrier projections (24) extend from a second housing (2), to a second position, in which the carrier projections (24) are completely maintained in the second housing (2).

10. A housing (102) dimensioned to receive electrical terminals therein, the housing (102) comprising:
a) a first end surface and an oppositely facing second end surface;
b) at least one carrier projection (124) extending from the first end surface in a direction away from the second end surface when in a first position, the carrier projection (124) having a free end (126);
characterized in that
c) at least one recess (128) extends from the second end surface in a direction toward the first end surface,
d) the recess (128) communicates with a first opening (130) of the housing (102);
e) whereby as a first respective housing is moved into the cooperation with a second respective housing, the free end (126) of the carrier projection (124) of the first housing will be positioned in the first opening (130) of the second housing, such that a carrier strip is formed;
f) whereby when the housings are separated, the projection (124) is bendable from the first position to a second position and cooperable with a shoulder (150) to prevent the projection from returning to the first position.

11. The housing (102) according to claim 10, characterized in that the carrier projection (124) is integrally moulded to the housing (102).

12. The housing according to claim 10 or 11, characterized in that the projection is disposed substantially orthogonally in the second position to its first position.

13. The housing according to claim 1, characterized in that each respective carrier projection is positioned in alignment with respective recesses (128).

14. The housing according to claim 2, characterized in that the carrier projection (124) does not extend substantially beyond the first end surface (4) when moved to the second opening (32).

## Patentansprüche

1. Gehäuse (2), das zum Aufnehmen elektrischer Anschlüsse dimensioniert ist, wobei das Gehäuse (2) folgendes aufweist:
a) eine erste Endfläche (6) und eine in die entgegengesetzte Richtung weisende zweite Endfläche (4);
b) wenigstens einen Trägerfortsatz (24), der sich von der ersten Endfläche (6) in Richtung von der zweiten Endfläche (4) wegerstreckt, wobei der Trägerfortsatz (24) ein freies Ende (26) aufweist;
**dadurch gekennzeichnet,**
c) daß sich wenigstens eine Aussparung (28) von der zweiten Endfläche (4) weg in Richtung auf die erste Endfläche (6) erstreckt;
d) daß die Aussparung (28) mit einer ersten Öffnung (30) und einer zweiten Öffnung (32) kommuniziert, die an dem Gehäuse (2) vorgesehen sind;
e) wodurch bei Bewegung eines ersten jeweiligen Gehäuses in Zusammenwirkung mit einem zweiten jeweiligen Gehäuse das freie Ende (26) des Trägerfortsatzes (24) des ersten Gehäuses in der ersten Öffnung (30) des zweiten Gehäuses positioniert wird, so daß ein Trägerstreifen gebildet wird;
f) wobei die freien Enden (26) in die zweite Öffnung (30) bewegbar sind, um die abgetrennten Trägerfortsätze (24) des ersten Gehäuses in dieser festzuhalten.

2. Gehäuse (2) nach Anspruch 1,
**dadurch gekennzeichnet,** daß der Trägerfortsatz (24) in integraler Weise an das Gehäuse (2) angeformt ist, wobei der Trägerfortsatz (24) von dem Gehäuse (2) abgetrennt wird, wenn das Gehäuse von dem Trägerstreifen entfernt werden soll, wobei das freie Ende (26) des Trägerfortsatzes (24) dann aus der ersten Öffnung (30) in die zweite Öffnung (32) bewegt wird und wobei die Aussparung (28) zum Aufnehmen des Trägerfortsatzes (24) in dieser dimensioniert ist, wenn das freie Ende (26) des Trägerfortsatzes (24) in die zweite Öffnung (32) bewegt wird.

3. Gehäuse (2) nach einem der Ansprüche 1 oder 2,
**dadurch gekennzeichnet,** daß das freie Ende (26) einen in seiner Nähe vorgesehenen vergrößerten Bereich aufweist, wobei der vergrößerte Bereich (26) Abmessungen besitzt, die geringfügig größer sind als die Abmessungen der Aussparung (28).

4. Gehäuse (2) nach Anspruch 3,
**dadurch gekennzeichnet,** daß der an dem freien Ende (26) vorgesehene vergrößerte Bereich (26) eine Erhebung ist.

5. Gehäuse (2) nach einem der Ansprüche 1, 2 oder 3,
**dadurch gekennzeichnet,** daß die Aussparung (28) angrenzend an eine erste Seitenfläche (8) des Gehäuses (2) vorgesehen ist und daß sich die erste und die zweite Öffnung (30, 32) durch die erste Seitenfläche (8) von der Aussparung (28) wegerstrecken.

6. Gehäuse (2) nach Anspruch 5,
**dadurch gekennzeichnet,** daß die Öffnungen (30, 32) durch einen Bereich der ersten Seitenfläche (8) voneinander beabstandet sind, der sich über der Aussparung (28) erstreckt, wobei in dem Bereich der ersten Seitenfläche (8) ein Schlitz (36) vorgesehen ist.

7. Gehäuse (2) nach einem der Ansprüche 1 bis 6,
**dadurch gekennzeichnet,** daß zwei Trägerfortsätze (24) und zwei Aussparungen (28) an jedem Gehäuse (2) vorgesehen sind.

8. Gehäuse (2) nach einem der Ansprüche 1 bis 7,
**dadurch gekennzeichnet,** daß jeder Trägerfortsatz in Ausrichtung mit der jeweiligen Aussparung (28) positioniert ist.

9. Verfahren zum Zuführen einzelner Anschlußgehäuse (2) zu einer Arbeitsstation, wobei das Verfahren folgende Schritte umfaßt:
Voranbewegen eines Trägerstreifens in derartiger Weise, daß ein bestimmtes Anschlußgehäuse (2) in der Nähe der Arbeitsstation positioniert wird; Abtrennen des bestimmten Anschlußgehäuses (2) von Trägerfortsätzen (24), so daß das bestimmte Gehäuse (2) relativ zu dem Trägerstreifen frei beweglich ist;
Bewegen der Trägerfortsätze (24) von einer ersten Position, in der sich die Trägerfortsätze (24) von einem zweiten Gehäuse (2) wegerstrecken, in eine zweite Position, in der die Trägerfortsätze (24) vollständig in dem zweiten Gehäuse (2) gehalten sind.

10. Gehäuse (102), das zum Aufnehmen elektrischer Anschlüsse dimensioniert ist, wobei das Gehäuse (102) folgendes aufweist:
a) eine erste Endfläche und eine in die entgegengesetzte Richtung weisende zweite Endfläche;
b) wenigstens einen Trägerfortsatz (124), der sich in einer ersten Position in Richtung von der zweiten Endfläche weg von der ersten Endfläche wegerstreckt, wobei der Trägerfortsatz (124) ein freies Ende (126) aufweist;
**dadurch gekennzeichnet,**
c) daß sich wenigstens eine Aussparung (128) von der zweiten Endfläche in Richtung auf die erste Endfläche wegerstreckt;
d) daß die Aussparung (128) mit einer ersten Öffnung (130) der Öffnung (102) kommuniziert;
e) wodurch bei Bewegung eines ersten jeweiligen Gehäuses in Zusammenwirkung mit einem zweiten jeweiligen Gehäuse das freie Ende (126) des Trägerfortsatzes (124) des ersten Gehäuses in der ersten Öffnung (130) des zweiten Gehäuses positioniert wird, so daß ein Trägerstreifen gebildet ist;
f) wodurch bei Trennung der Gehäuse voneinander der Fortsatz (124) von der ersten Position in eine zweite Position biegbar ist und zum Zusammenwirken mit einer Schulter (150) ausgelegt ist, um den Fortsatz an einem Zurückkehren in die erste Position zu hindern.

11. Gehäuse (102) nach Anspruch 10,
**dadurch gekennzeichnet,** daß der Trägerfortsatz (124) in integraler Weise an das Gehäuse (102) angeformt ist.

12. Gehäuse nach Anspruch 10 oder 11,
**dadurch gekennzeichnet,** daß der Fortsatz in der zweiten Position im wesentlichen orthogonal zu seiner ersten Position angeordnet ist.

13. Gehäuse nach Anspruch 1,
**dadurch gekennzeichnet,** daß jeder Trägerfortsatz in Ausrichtung mit einer jeweiligen Aussparung (128) positioniert ist.

14. Gehäuse nach Anspruch 2,
**dadurch gekennzeichnet,** daß sich der Trägerfortsatz (124) nicht wesentlich über die erste Endfläche (4) hinauserstreckt, wenn er in die zweite Öffnung (32) bewegt ist.

## Revendications

1. Boîtier (2) dimensionné pour recevoir à l'intérieur des bornes électriques, le boîtier (2) comportant :
a) une première surface extrême (6) et une seconde surface extrême (4) tournée en sens opposé ;
b) au moins une saillie (24) de support s'étendant depuis la première surface extrême (6) dans un sens s'éloignant de la seconde surface extrême (4), la saillie (24) de support ayant une extrémité libre (26) ;
caractérisé en ce que :
c) au moins un évidement (28) s'étend depuis la seconde surface extrême (4) en direction de la première surface extrême (6),
d) l'évidement (28) communique avec une première ouverture (30) et une seconde ouverture (32) prévues sur le boîtier (2) ;
e) grâce à quoi, lorsqu'un premier boîtier respectif est amené en coopération avec un second boîtier respectif, l'extrémité libre (26) de la saillie (24) de support du premier boîtier se positionne dans la première ouverture (30) du second boîtier afin de former une bande de support ;
f) les extrémités libres (26) étant mobiles vers la seconde ouverture (30) pour y retenir les saillies de support sectionnées (24) du premier boîtier.

2. Boîtier (2) selon la revendication 1, caractérisé en ce que la saillie (24) de support vient de moulage avec le boîtier (2), la saillie (24) de support étant sectionnée du boîtier (2) lorsque ce dernier doit être enlevé de la bande de support, l'extrémité libre (26) de la saillie (24) de support est ensuite déplacée de la première ouverture (30) à la seconde ouverture (32), l'évidement (28) étant dimensionné pour recevoir à l'intérieur la saillie (24) de support lorsque l'extrémité libre (26) de la saillie (24) de support est déplacée vers la seconde ouverture (32).

3. Boîtier (2) selon l'une des revendications 1 ou 2, caractérisé en ce que l'extrémité libre (26) comporte une partie élargie proche de cette extrémité, la partie élargie (26) ayant des dimensions qui sont légèrement plus grandes que les dimensions de l'évidement (28).

4. Boîtier (2) selon la revendication 3, caractérisé en ce que la partie élargie (26) prévue à l'extrémité libre (26) est un bossage.

5. Boîtier (2) selon l'une des revendications 1, 2 ou 3, caractérisé en ce que l'évidement (28) est prévu de façon à être adjacent à une première surface latérale (8) du boîtier (2), les première et seconde ouvertures (30, 32) s'étendant depuis l'évidement (28) à travers la première surface latérale (8).

6. Boîtier (2) selon la revendication 5, caractérisé en ce que les ouvertures (30, 32) sont espacées l'une de l'autre par une partie de la première surface latérale (8) qui s'étend au-dessus de l'évidement (28), une fente (36) étant située dans la partie de la première surface latérale (8).

7. Boîtier (2) selon l'une des revendications 1-6, caractérisé en ce que deux saillies (24) de support et deux évidements (28) sont prévus sur chaque boîtier (2).

8. Boîtier (2) selon l'une des revendications 1-7, caractérisé en ce que chaque saillie respective de support est positionnée en alignement avec des évidements respectifs (28).

9. Procédé de distribution de boîtiers individuels (2) de bornes à un poste de travail, le procédé comprenant les étapes dans lesquelles :
on fait avancer une bande de support de manière que le boîtier individuel (2) de bornes soit placé à proximité du poste de travail ;
on sectionne le boîtier individuel (2) de bornes des saillies (24) de support, de manière que le boîtier individuel (2) puisse se déplacer librement par rapport à la bande de support ;
on déplace les saillies (24) de support depuis une première position, dans laquelle les saillies (24) de suppprt s'étendent depuis un second boîtier (2), jusqu'à une seconde position dans laquelle les saillies (24) de support sont complètement maintenues dans le second boîtier (2).

10. Boîtier (102) dimensionné pour recevoir à l'intérieur des bornes électriques, le boîtier (102) comportant :
a) une première surface extrême et une seconde surface extrême tournée dans un sens opposé ;
b) au moins une saillie (124) de support s'étendant depuis la première surface extrême dans un sens s'éloignant de la seconde surface extrême dans une première position, la saillie (124) de support ayant une extrémité libre (126) ;
caractérisé en ce que
c) au moins un évidement (128) s'étend depuis la seconde surface extrême en direction de la première surface extrême,
d) l'évidement (128) communique avec une première ouverture (130) du boîtier (102) ;
e) grâce à quoi, lorsqu'un premier boîtier respectif est amené en coopération avec un second boîtier respectif, l'extrémité libre (126) de la saillie (124) de support du premier boîtier se trouve positionnée dans la première ouverture (130) du second boîtier, afin de former une bande de support ;
f) grâce à quoi, lorsque les boîtiers sont séparés, la saillie (124) peut fléchir de la première position vers une seconde position et peut coopérer avec un épaulement (150) pour empêcher la saillie de revenir dans la première position.

11. Boîtier (102) selon la revendication 10, caractérisé en ce que la saillie (124) de support vient de moulage avec le boîtier (102).

12. Boîtier selon la revendication 10 ou 11, caractérisé en ce que la saillie est disposée de façon à être sensiblement orthogonale, dans sa seconde position, à ce qu'elle est dans sa première position.

13. Boîtier selon la revendication 1, caractérisé en ce que chaque saillie de support respective est positionnée en alignement avec des évidements respectifs (128).

14. Boîtier selon la revendication 2, caractérisé en ce que la saillie (124) de support ne s'étend pas sensiblement au-delà de la première surface extrême (4) lorsqu'elle est déplacée vers la seconde ouverture (32).
